# EUROPÄISCHE PATENTANMELDUNG

(11) **EP 4 194 072 A1**
(43) Veröffentlichungstag der Anmeldung: **14.06.2023**
(21) Anmeldenummer: 21213239.3
(22) Anmeldetag: 08.12.2021
(51) Int. Cl.: B01D 17/02, B01D 17/12, G01F 23/284, G01F 23/292

(54) **PHASENTRENNER UND VERFAHREN ZUM BETRIEB EINES PHASENTRENNERS**

(71) Anmelder: Little Things Factory GmbH, 56479 Elsoff (DE)
(72) Erfinder: KADEL, Klaus, 56479 Elsoff (DE); SCHILLING, Alexander, 56479 Elsoff (DE); SCHNEIDER, Markus, 56479 Elsoff (DE); MÜLLER, Claas, 56479 Elsoff (DE)
(74) Vertreter: Winter, Brandl - Partnerschaft mbB

(57) **Zusammenfassung**

Offenbart sind ein Phasentrenner und ein Verfahren zu dessen Betrieb. In einer Phasentrennkammer werden zwei Fluide voneinander getrennt. Die Phasentrennkammer hat einen Einlass und zwei Auslässe, wobei letztere einen vertikalen Abstand zueinander aufweisen. Mittels einer Steuerelektronik und eines jeweiligen Ventils oder einer jeweiligen Mikropumpe wird ein jeweiliger Volumenstrom der beiden Fluide durch den jeweiligen Auslass in Abhängigkeit einer Sensoranordnung gesteuert. Die Sensoranordnung ist im Bereich einer Auslasszone der Phasentrennkammer angeordnet. Die Sensoranordnung weist einen Laser und eine Laserdetektoranordnung auf, über die eine Brechung und/oder eine Reflexion des Laserstrahls detektierbar sind / ist.

## Beschreibung

### Beschreibung

Die Erfindung betrifft einen Phasentrenner gemäß dem Oberbegriff des Patentanspruchs 1 und ein Verfahren zum Betrieb eines derartigen Phasentrenners.

In der Druckschrift EP 3 241 597 A1 ist ein derartiger Phasentrenner offenbart, der eine kontinuierlich horizontal durchströmbare Phasentrennkammer ausweist, die einen Einlass für ein Gemisch aus zwei Phasen bzw. Flüssigkeiten und zwei Auslässe für die beiden voneinander getrennten Phasen aufweist. Die beiden Auslässe haben einen vertikalen Abstand zueinander. In der Phasentrennkammer sammelt sich - insbesondere in einer stromabwärts angeordneten Auslasszone - die Phase mit der höheren Massendichte in einem unteren Bereich, während sich die Phase mit der geringeren Massendichte in einen oberen Bereich verdrängt wird. Dazwischen bildet sich eine Phasengrenze, die in der Auslasszone im Idealfall eine ebene Fläche ist.

In der Auslasszone der Phasentrennkammer ist eine Reihe von mehreren Sensoren angeordnet, die einen vertikalen Abstand zueinander haben. Über Extinktionsunterschiede kann erkannt werden, ob sich in den unterschiedlichen Höhenbereichen der Auslasszone die verschiedenen Phasen gesammelt haben. Weiterhin kann erkannt werden, zwischen welchen beiden Sensoren sich die Phasengrenze ergeben bzw. eingestellt hat. Über eine Steuerung der beiden Auslässe mittels eines jeweiligen Nadelventils kann die Phasengrenze verstellt und im Bereich zwischen den beiden mittleren Sensoren eingestellt werden. Jeder Sensor ist aus einer UV-Lichtschranke mit einer UV-Lichtquelle, z.B. einer UV-LED, und einem UV-Lichtdetektor, z.B. einer Photodiode gebildet.

Darauf aufbauend liegt der Erfindung die Aufgabe zu Grunde, einen Phasentrenner und ein Verfahren zum Betrieb eines Phasentrenners zu schaffen, dessen Funktion und Zuverlässigkeit auch bei unterschiedlichen Fluidgemischen verbessert ist. Dabei sollen auch Flüssigkeiten und Gase voneinander trennbar sein.

Diese Aufgabe wird gelöst durch einen Phasentrenner mit den Merkmalen des Patentanspruchs 1 und durch ein Verfahren mit den Merkmalen des Patentanspruchs 14.

Weitere vorteilhafte Ausgestaltungen der Erfindung sind in den abhängigen Patentansprüchen beschrieben.

Der beanspruchte Phasentrenner ist zur Trennung zweier Fluide mit einer Phasentrennkammer ausgelegt, die einen Einlass und zwei Auslässe aufweist, wobei die beiden Auslässe entlang einer vertikalen Richtung, die im Folgenden als vertikale Querrichtung bezeichnet wird, einen Abstand zueinander haben. Der Einlass und die beiden Auslässe spannen vorzugsweise ein nicht körperliches Dreieck auf. In der Phasentrennkammer benachbart zum Einlass ist eine Einlasszone und benachbart zu den beiden Auslässen eine Auslasszone angeordnet oder gebildet. Von der Einlasszone zu der Auslasszone ist eine vorzugsweise horizontale Strömungsrichtung definiert. Im Außenbereich der Auslasszone ist eine Sensoranordnung vorgesehen. Mittels einer Steuerelektronik ist ein jeweiliger Volumenstrom der beiden Fluide durch die beiden Auslässe in Abhängigkeit der Sensoranordnung steuerbar. Dadurch ist die Höhe der Phasengrenze etwa mittig bzw. auf halbe Höhe zwischen den beiden Auslässen regelbar. Erfindungsgemäß weist die Sensoranordnung einen Laser und eine Laserdetektoranordnung auf, über die eine Brechung des Laserstrahls an zumindest einem der beiden Fluide und/oder eine Reflexion des Laserstrahls an der Phasengrenze detektierbar sind/ist. Die Brechung an einem der beiden Fluide ist insbesondere dann detektierbar, wenn die Phasengrenze entfernt von der Soll-Phasengrenze ist. Die Reflexion ist insbesondere dann detektierbar, wenn die Phasengrenze nahe der Soll-Phasengrenze ist oder diese erreicht hat. Dann kann die Reflexion eine Totalreflexion sein.

Damit ist ein Phasentrenner geschaffen, dessen Funktion und Zuverlässigkeit bei Fluidgemischen verbessert ist, deren beide Fluide eine voneinander abweichende optische Dichte bzw. unterschiedliche Brechungsindizes haben. Es können mit dem erfindungsgemäßen Phasentrenner auch Flüssigkeiten und Gase voneinander getrennt werden. Der erfindungsgemäße Phasentrenner kann daher auch als Fluidtrenner und die Phasengrenze als Fluidgrenze bezeichnet werden.

An den beiden Auslässen können - wie per se aus dem Stand der Technik bekannt - Ventile vorgesehen sein. Alternativ können auch Mikropumpen vorgesehen sein, die in Abhängigkeit der Steuerelektronik das jeweilige Fluid aus den jeweiligen Auslass abführen. Damit ist nach Beendigung des Trennungsprozesses ein weitestgehendes Leersaugen der Auslasszone und ein vollständiges Absaugen der Fluide aus den beiden Auslässen möglich.

Bauraumtechnisch ist es vorteilhaft, wenn der Laser an einer ersten Seite und die Laserdetektoranordnung an einer der ersten Seite gegenüberliegenden zweiten Seite der Strömungsrichtung angeordnet sind.

Vorzugsweise ist in einem Parallelabstand zur Strömungsrichtung jeweils eine flächige Seitenwand der Phasentrennkammer angeordnet.

Damit die Sensoranordnung im Außenbereich der Auslasszone ohne Fluidbeaufschlagung angeordnet werden kann, müssen die beiden Seitenwände für den Laserstrahl zumindest abschnittsweise transparent sein, oder die (gesamte) Phasentrennkammer ist aus einem für den Laserstrahl transparenten Material, insbesondere Glas oder Silizium gefertigt.

Um eine Druckfestigkeit der Phasentrennkammer von 10 bar oder darüber zu erreichen, ist die Phasentrennkammer im Außenbereich der Auslasszone vorzugsweise mit einer mechanischen Unterstützung versehen.

Vorzugsweise ist die Phasentrennkammer von 0,1 bis 50 bar druckfest ausgelegt.

Die Soll-Phasengrenze ist vorzugsweise mittig, also auf halber Höhe zwischen den beiden Auslässen. Dann ist die Strömungsrichtung entlang der Soll-Phasengrenze definiert.

Damit der Laserstrahl erst durch das Fluid mit der geringeren Massendichte und dann auf die Phasengrenze zu dem Fluid mit der höheren Massendichte trifft, ist er schräg nach unten gerichtet. Vorzugsweise trifft der Laserstrahl unter 25° bis 35° insbesondere unter etwa 30° die Phasengrenze. Dabei hat der Laserstrahl eine Richtungskomponente in horizontaler Querrichtung zur Strömungsrichtung und eine Richtungskomponente in vertikaler Querrichtung zur Strömungsrichtung.

Um die Höhe der an der Phasengrenze gebrochenen Komponente des Laserstahls und die Höhe der an der Phasengrenze reflektierten Komponente des Laserstrahls detektieren zu können, hat die Laserdetektoranordnung vorzugsweise einen unteren und einen oberen positionssensitiven Detektor (position sensitive device, PSD). Dabei ist der untere positionssensitive Detektor unterhalb der Soll-Phasengrenze angeordnet, während der obere positionssensitive Detektor oberhalb der Soll-Phasengrenze angeordnet ist. Wenn die beiden positionssensitiven Detektoren rechteckigen Sensorflächen haben, sind diese jeweils vertikal ausgerichtet um den Erfassungsbereich bei unterschiedlichen Brechungen und/oder bei unterschiedlichen Höhen der Phasengrenze zu maximieren.

Damit die vertikale Ausdehnung der positionssensitiven Detektoren in Grenzen bleiben kann und trotzdem zwei Fluide mir sehr verschiedene Brechungsindizes erfasst und getrennt werden können, ist die Phasentrennkammer vorzugsweise vergleichsweise flach. Genauer gesagt hat sie in horizontaler Querrichtung eine vergleichsweise geringe Ausdehnung.

Bei einer konkreten Ausgestaltung der erfindungsgemäßen Phasentrenners ist die Laserdetektoranordnung auf oder an einer Leiterpatte befestigt. Der Laser kann mittels eines auf oder an der Leiterpatte angeordneten Mosfets mit Strom versorgt und/oder gesteuert werden. Damit lassen sich kürzere Schaltzeiten und eine höhere Lebensdauer des Lasers erreichen.

Bei einer konstruktiven Ausgestaltung ist die Leiterpatte von einem Leiterplattenhalter in einem Abstand entlang der horizontalen Querrichtung zur Seitenwand der Phasentrennkammer gehalten, während der Laser von einem Laserhalter gehalten ist. Der Leiterplattenhalter und/oder der Laserhalter können aus Aluminium und/oder mit einem additiven Fertigungsverfahren (3D-Druckverfahren) hergestellt sein.

Wenn der Leiterplattenhalter und der Laserhalter aus einem gleichen Material gefertigt sind, haben beide Halter denselben thermischen Ausdehnungskoeffizienten und die mechanischen Spannungen werden beim Erwärmen (z.B. durch die Energie des Lasers) bzw. beim Abkühlen verringert. Damit ist die Genauigkeit der Sensoranordnung verbessert.

Vorrichtungstechnisch einfach ist es, wenn die Phasentrennkammer zwischen dem Leiterplattenhalter und dem Laserhalter mittels einer Verschraubung eingespannt ist.

Wenn der Leiterplattenhalter relativ zum Laser und/oder zur Phasentrennkammer positionierbar ist, ist der erfindungsgemäße Phasentrenner bei der Montage optimierbar bzw. einstellbar und sehr flexibel einsetzbar.

Die Ausbildung der Phasengrenze wird durch ausreichende Verweilzeit in der Phasentrennkammer ermöglicht. Diese Verweilzeit ist durch Verringerung der Strömungsgeschwindigkeit und/oder Vergrößerung der Phasentrennkammer in Strömungsrichtung verlängerbar.

Um die Leistung des erfindungsgemäßen Phasentrenners zu steigern kann dieser auch mit weiteren erfindungsgemäßen, vorzugsweise baugleichen Phasentrennern zu einer Kaskade weitergebildet werden. Dabei wird mindestens einer der beiden Auslässe mit dem Einlass eines weiteren Phasentrenners verbunden.

Wenn die beiden Fluide ähnliche Massedichte haben, kann auch ein Trennbehälter, der als Settler bezeichnet werden kann, der Phasentrennkammer vorgeschaltet werden. Im Trennbehälter wird ähnlich wie beim Phasentrenner eine Phasengrenze zwischen den beiden Fluide ausgebildet.

Bei einer nicht zur Erfindung gehörenden Variante des Phasentrenners mit vorgeschaltetem Trennbehälter hat der Trennbehälter oberhalb der Soll-Phasengrenze einen oberen Auslass und unterhalb der Soll-Phasengrenze einen unteren Auslass. Die beiden Auslässe des Trennbehälters werden jeweils mit einem Auslass des vorbeschriebenen Phasentrenners verbunden. Aus dessen Phasentrennkammer werden die beiden entmischten Fluide abgeführt.

Bei einer bevorzugten Variante des Phasentrenners mit vorgeschaltetem Trennbehälter ist ein Auslass des Trennbehälters mit dem Einlass der Phasentrennkammer verbunden, die dann erfindungsgemäß durchströmt wird. Wenn der Auslass des Trennbehälters oberhalb der der Phasengrenze des Trennbehälters angeordnet ist, wird das weniger massedichte Fluid in die Phasentrennkammer geführt. Wenn der Auslass des Trennbehälters unterhalb der der Phasengrenze des Trennbehälters angeordnet ist, wird das massedichtere Fluid in die Phasentrennkammer geführt.

Es ist aber auch möglich die Höhe des Auslasses des Trennbehälters mit der Höhe der Phasengrenze des Trennbehälters zusammenzuführen, so dass die Phasentrennkammer mit dem Fluidgemisch befüllt wird.

Das beanspruchte Verfahren dient zum Betrieb eines vorbeschriebenen Phasentrenners und hat folgende Schritte:
- Einströmen oder Einführen des Fluidgemisches durch den Einlass in die Phasentrennkammer;
- Ermöglichen der Ausbildung der Phasengrenze in der Phasentrennkammer;
- Abströmen oder Abführen des unteren Fluids durch den unteren Auslass und Abströmen oder Abführen des oberen Fluids durch den oberen Auslass; und
- Regeln der Phasengrenze etwa in die Mitte der Phasentrennkammer oder etwa auf halber Höhe zwischen den beiden Auslässen durch Steuerung der Ventile. Erfindungsgemäß erfolgen die Schritte:
- Emittieren des Laserstrahls auf die Phasengrenze;
- Ermittlung der Brechung und/oder Reflexion des Laserstrahls an der Phasengrenze. Alle Schritte erfolgen vorzugsweise kontinuierlich oder zumindest periodisch.

Die Brechung an einem der beiden Fluide wird insbesondere dann detektiert, wenn die Phasengrenze zwischen dem Medium und Luft entfernt von der Soll-Phasengrenze ist. Die Reflexion wird insbesondere dann detektiert, wenn die Phasengrenze zwischen dem Medium und Luft nahe der Soll-Phasengrenze ist oder diese erreicht hat. Dann kann die Reflexion eine Totalreflexion sein.

Damit ist ein Verfahren zum Betrieb eines Phasentrenners geschaffen, dessen Zuverlässigkeit bei Fluidgemischen verbessert ist, deren beide Fluide eine voneinander abweichende optische Dichte bzw. unterschiedliche Brechungsindizes haben. Es können mit dem erfindungsgemäßen Verfahren auch Flüssigkeiten und Gase voneinander getrennt werden.

Für die Steuerelektronik ergeben sich einfache Möglichkeiten zu kontrollieren, ob die Phasengrenze mittig in der Phasentrennkammer (Soll-Phasengrenze) ist. Zum einen können die geringeren Ausgangssignale des unteren positionssensitiven Detektors, zum anderen kann der Anstieg der Signale des oberen positionssensitiven Detektors genutzt werden. Es kann auch der Wechsel des Detektors verwendet werden.

Bei einer besonders bevorzugten Weiterbildung des erfindungsgemäßen Verfahrens erfolgt eine vorbereitende Kalibrierung der Sensoranordnung durch Ermittlung der jeweiligen Brechung des Laserstrahls für die beiden zu trennenden Fluide getrennt. Dazu wird die Phasentrennkammer nacheinander mit den beiden zu trennenden Fluiden befüllt, und dann wird einer jeweiligen gebrochenen Laserstrahlkomponente an der Laserdetektoranordnung für das jeweilige Fluid getrennt erfasst.

Bei einer besonders bevorzugten Weiterbildung des Verfahrens mit der Kalibrierung wird bei dieser eine Phasengrenze zwischen dem Fluid, das kalibriert werden soll, und Luft von unten und/oder von oben an der Soll-Phasengrenze vorbei bewegt, so dass dabei Reflexion, insbesondere Totalreflexion entsteht.

Das optische Messverfahren ermöglicht der Steuerelektronik nach der Kalibrierung eine Kontrolle der Reaktion über die Auswertung der Fluide in der Trennkammer.

Das optische Messverfahren ermöglicht der Steuerelektronik nach der Kalibrierung eine Bestimmung der Reinheit mindestens eines der beiden Fluide durch eine Ermittlung der Brechung des Laserstrahls für das Fluid, dessen Reinheit bestimmt werden soll.

Bei einer besonders bevorzugten Weiterbildung des Verfahrens mit der Bestimmung der Reinheit wird bei dieser eine Phasengrenze zwischen dem Fluid, dessen Reinheit bestimmt werden soll, und Luft von unten und/oder von oben an der Soll-Phasengrenze vorbei bewegt, so dass dabei Reflexion, insbesondere Totalreflexion entsteht.

Ein Ausführungsbeispiel des erfindungsgemäßen Phasentrenners ist in den Figuren dargestellt. Es zeigen
Figur 1 eine Phasentrennkammer des Ausführungsbeispiels des erfindungsgemäßen Phasentrenners in einer schematischen geschnittenen Darstellung,
Figur 2 das Ausführungsbeispiel des erfindungsgemäßen Phasentrenners in einer perspektivischen Ansicht,
Figur 3 einen Ausschnitt der Phasentrennkammer aus Figur 1 in einer weiteren geschnittenen Darstellung,
Figur 4 den Phasentrenner aus Figur 2 in einer perspektivischen Ansicht; und
Figur 5 eine Weiterbildung des Phasentrenners der vorhergehenden Figuren mit einem vorgeschalteten Trennbehälter.

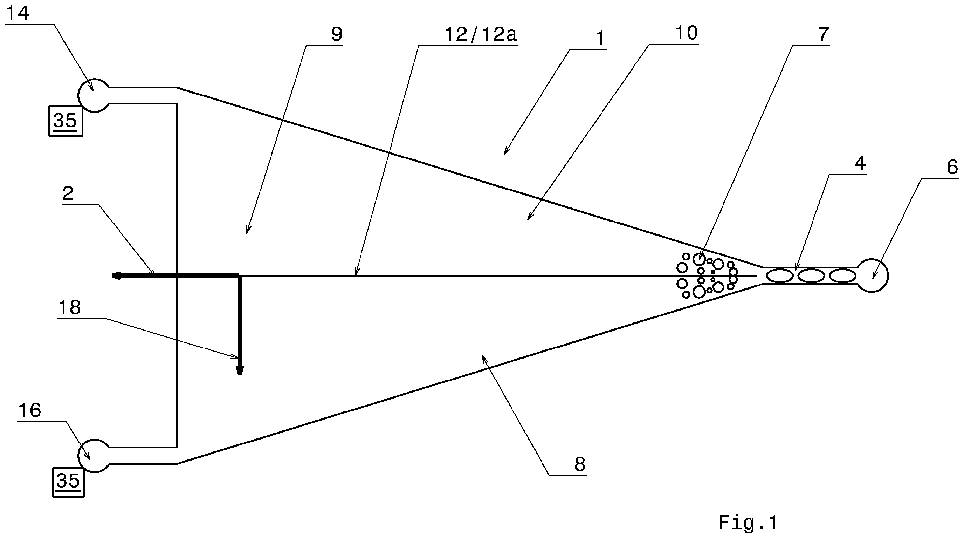

Figur 1 zeigt eine Phasentrennkammer 1 des Ausführungsbeispiels des erfindungsgemäßen Phasentrenners in einer schematischen geschnittenen Darstellung. Sie wird entlang einer im Wesentlichen waagerechten oder horizontalen Strömungsrichtung 2 von einem Fluidgemisch 4 durchströmt. Genauer gesagt strömt des Fluidgemisch 4 durch einen Einlass 6 und eine Einlasszone 7 und trennt sich dann in Richtung einer Auslasszone 9 der Phasentrennkammer 1 in ein unteres Fluid 8 mit einer höheren Massendichte und ein oberes Fluid 10 mit einer geringeren Massendichte. Dabei entwickelt sich insbesondere in der Auslasszone 9 eine Phasengrenze 12, die im Idealfall mit einer mittigen Soll-Phasengrenze 12a zusammenfällt.

Das untere Fluid 8 strömt durch einen unteren Auslass 16 aus der Phasentrennkammer 1 heraus, während das obere Fluid 10 durch einen oberen Auslass 14 aus der Phasentrennkammer 1 herausströmt. Die beiden Auslässe 14, 16 sind entlang einer vertikalen Querrichtung 18 zueinander beabstandet. Damit ergibt sich ein nicht körperliches Dreieck zwischen dem Einlass 6 und den beiden Auslässen 14, 16. "Nicht körperliches Dreieck" bedeutet, dass nicht körperliche Verbindungslinien zwischen den drei Anschlüssen ein Dreieck ergeben würden.

An jeden der beiden Auslässen 14, 16 ist (in per se aus den Stand der Technik bekannter Weise) ein Ventil 35 angeordnet, über das der Volumenstrom des jeweiligen Fluids 8, 10 unabhängig voneinander gesteuert werden kann, um so die Phasengrenze 12 auf die Soll-Phasengrenze 12a einzustellen. Alternativ können bei den Bezugszeichen 35 auch jeweilige Mikropumpen vorgesehen sein, die in Abhängigkeit einer Steuerelektronik das jeweilige Fluid 8, 10 unabhängig voneinander aus dem jeweiligen Auslass 14, 16 abführen.

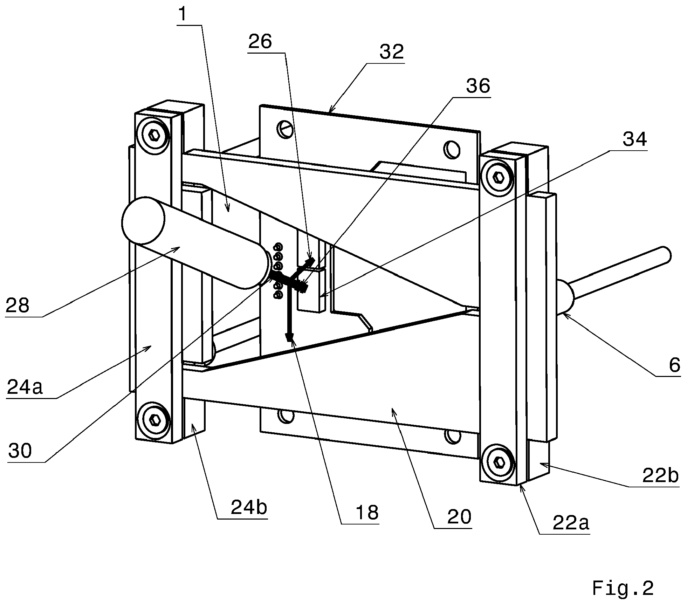

Figur 2 zeigt das Ausführungsbeispiel des erfindungsgemäßen Phasentrenners in einer schematischen perspektivischen Ansicht. Die Phasentrennkammer 1 hat beim gezeigten Ausführungsbeispiel eine flache dreieckige Form und ist in einem flachen quaderförmigen Glaskörper 20 gebildet. Der Glaskörper 20 ist zwischen zwei eingangsseitigen Klemmteilen 22a, 22b und zwischen zwei ausgangsseitigen Klemmteilen 24a, 24b eingespannt. An einem eingangsseitigen Klemmteil 22b ist der Einlass 6 gebildet, während an einem ausgangsseitigen Klemmteil 24b die beiden Auslässe 14, 16 (vgl. Figur 1) gebildet sind. Damit erstrecken sich der Einlass 6 und die beiden Auslässe 14, 16 beim gezeigten Ausführungsbeispiel abschnittsweise in einer horizontalen Querrichtung 26, die senkrecht zur vertikalen Querrichtung 18 und senkrecht zur Strömungsrichtung 2 (vgl. Figur 1) ist.

An einer von dem Einlass 6 und von den beiden Auslässe 14, 16 abgewandten Seite der Phasentrennkammer 1 ist ein Laser 28 angeordnet, dessen Laserstrahl 30 auf die Soll-Phasengrenze 12a (vgl. Figur 1) gerichtet ist und derart schräg angestellt ist, dass er eine Richtungskomponente in horizontaler Querrichtung 26 und eine Richtungskomponente in vertikaler Querrichtung 18 hat. Genauer gesagt ist der Laserstrahl 30 um typischerweise 30 Grad gegenüber der horizontalen Querrichtung 26 angestellt.

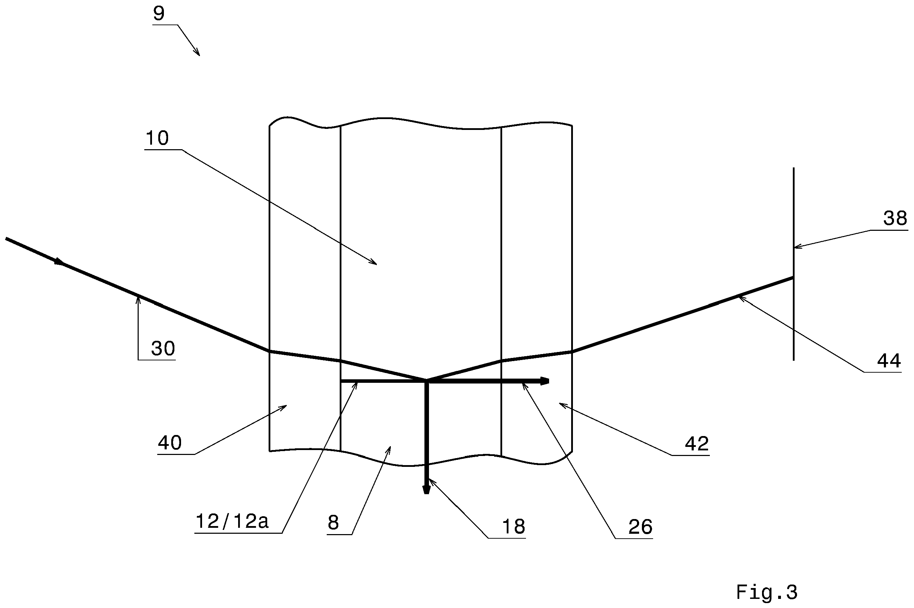

Vor dem Normalbetrieb des Phasentrenners erfolgt eine Kalibrierung mit den beiden Fluiden 8 und 10 nacheinander. Dazu ist gemäß Figur 2 die Phasentrennkammer 1 mit nur einem der beiden Fluide 8 oder 10 befüllt. Der Laserstahl 30 wird beim Eintritt in das Glas einer ersten Seitenwand und beim Übertritt vom Glas in das Fluid 8, 10 und beim Übertritt vom Fluid 8, 10 in das Glas einer zweiten Seitenwand und beim Austritt aus dem Glas der zweiten Seitenwand gebrochen. (Die beiden Seitenwände sind Bestandteil des Glaskörpers 20 und in Figur 3 gezeigt.) Da sich nur ein Fluid 8 oder 10 in der Phasentrennkammer 1 befindet, entfällt die im Normalbetrieb wichtige Phasengrenze 12 zwischen den beiden zu trennenden Fluiden 8, 10 und die Brechung des Laserstahls 30 daran. Trotzdem tritt auch bei der Kalibrierung eine mehrfach gebrochene Laserstrahlkomponente 36 aus der zweiten Seitenwand aus.

An einer dem Laser 28 gegenüberliegenden Seite der Phasentrennkammer 1 ist eine Leiterplatte 32 angeordnet, an der ein unterer positionssensitiver Detektor 34 zur Ermittlung der Höhe der gebrochenen Laserstrahlkomponente 36 befestigt ist.

Figur 3 zeigt einen Ausschnitt der Auslasszone 9 der Phasentrennkammer 1 aus den Figuren 1 und 2 in einer weiteren geschnittenen Darstellung und weiterhin einen oberen positionssensitiven Detektor 38, der nur symbolisch dargestellt ist. Auch der obere positionssensitive Detektor 38 ist an der Leiterplatte 32 (vgl. Figur 2) befestigt und gemeinsam mit dem unteren positionssensitiven Detektor 34 (vgl. Figur 2) in einer senkrechten Sensorebene angeordnet.

Im Normalbetrieb des Phasentrenners wird die Phasentrennkammer 1 von den beiden Fluiden 8, 10 durchströmt, die in der gezeigten Auslasszone 9 die Phasengrenze 12 ausgebildet haben. Durch Steuerung der beiden Ventile 35 (vgl. Figur 1) wurde die Phasengrenze 12 mit der Soll-Phasengrenze 12a in Übereinstimmung gebracht.

Der Laserstahl 30 des fest installierten Lasers 28 wird beim Eintritt in das Glas der ersten Seitenwand 40 und beim Übertritt vom Glas in das obere Fluid 10 und beim Übertritt vom oberen Fluid 10 in das Glas der zweiten Seitenwand 42 und beim Austritt aus dem Glas der zweiten Seitenwand 42 gebrochen. Insbesondere wird der Laserstrahl 30 an der Phasengrenze 12 reflektiert, so dass eine reflektierte Laserstrahlkomponente 44 aus der zweiten Seitenwand 42 austritt. Dessen Position wird vom oberen positionssensitiven Detektor 38 erfasst.

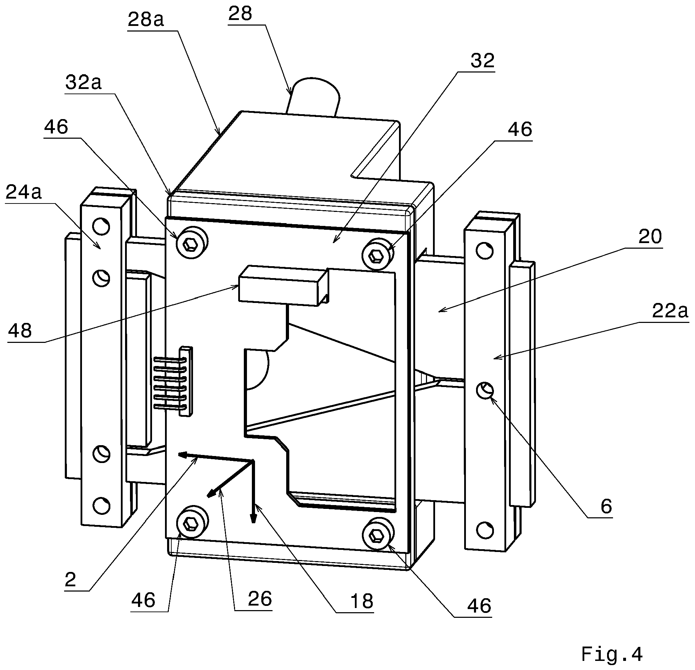

Figur 4 zeigt den Phasentrenner aus Figur 2 in einer perspektivischen Ansicht. Die Strömungsrichtung 2 ist in Figur 2 von rechts nach links gerichtet. Insbesondere ist die von der Phasentrennkammer 1 abgewandte Seite der Leiterplatte 32 zu erkennen. Dort ist ein Mosfet 48 befestigt und elektrisch kontaktiert, mit dem der Laser 28 gesteuert wird.

Die Leiterplatte 32 ist an einem Leiterplattenhalter 32a befestigt. Der Laser 28 ist an einem Laserhalter 28a befestigt. Beide Halter 28a, 32a sind beispielsweise in einem 3D-Druckverfahren hergestellt und über eine Verschraubung 46 aneinander befestigt. Genauer gesagt spannt die Verschraubung 46 den Glaskörper 20 der Phasentrennkammer 2 zwischen den Haltern 28a, 32a ein.

Um eine Druckfestigkeit der Phasentrennkammer 1 auch über 10 bar zu gewährleisten können die beiden Halter 28a, 32a aus Metall gefertigt sein.

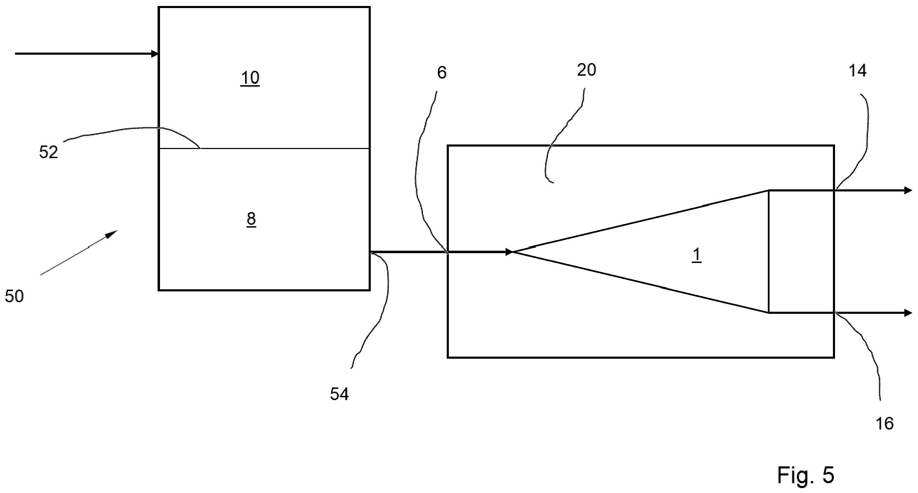

Figur 5 zeigt eine Weiterbildung des Phasentrenners gemäß den vorhergehenden Figuren mit einem vorgeschalteten Trennbehälter 50, der als Settler bezeichnet wird. Diese Weiterbildung ist vorteilhaft, wenn die beiden Fluide 8, 10 ähnliche Massedichte haben. Im Trennbehälter 50 wird (ähnlich wie beim Phasentrenner des vorhergehenden Ausführungsbeispiels) eine Phasengrenze 52 zwischen den beiden Fluiden 8, 10 ausgebildet.

Ein Auslass 54 des Trennbehälters 50 ist mit dem Einlass 6 der Phasentrennkammer 1 verbunden, die dann in Richtung zu den beiden Auslässen 14, 16 durchströmt wird. Da der Auslass 54 des Trennbehälters 50 unterhalb der der Phasengrenze 52 des Trennbehälters 50 angeordnet ist, wird gemäß Figur 5 das massedichtere Fluid 8 in die Phasentrennkammer 1 geführt. Entsprechend werden dort nur noch geringe Restmengen des weniger massedichten Fluids 10 abgetrennt und über den minimal geöffneten oberen Auslass 14 abgeführt oder die Steuerelektronik schließt den oberen Auslass 14 komplett.

Offenbart sind ein Phasentrenner und ein statisches Trennverfahren zu dessen Betrieb. In einer Phasentrennkammer 1 werden zwei Fluide 8, 10, die sich entmischen, voneinander getrennt. Die Phasentrennkammer 1 hat einen Einlass 6 und zwei Auslässe 14, 16, wobei letztere einen vertikalen Abstand zueinander aufweisen. Die Entmischung erfolgt durch die Dichteunterschiede der Fluide. Mittels einer Steuerelektronik und eines jeweiligen Ventils 35 oder einer jeweiligen Mikropumpe wird ein jeweiliger Volumenstrom der beiden Fluide 8, 10 unabhängig voneinander durch den jeweiligen Auslass 14, 16 in Abhängigkeit einer Sensoranordnung gesteuert. Die Sensoranordnung ist im Bereich einer Auslasszone 9 der Phasentrennkammer 1 angeordnet. Die Sensoranordnung weist einen Laser 28 und eine Laserdetektoranordnung auf, über die eine Brechung und/oder eine Reflexion des Laserstrahls 30 detektierbar sind / ist.

### Bezugszeichenliste

- 1: Phasentrennkammer
- 2: Strömungsrichtung
- 4: Fluidgemisch
- 6: Einlass
- 7: Einlasszone
- 8: unteres Fluid
- 9: Auslasszone
- 10: oberes Fluid
- 12: Phasengrenze
- 12a: Soll-Phasengrenze
- 14: oberer Auslass
- 16: unterer Auslass
- 18: vertikale Querrichtung
- 20: Glaskörper
- 22a: eingangsseitiges Klemmteil
- 22b: eingangsseitiges Klemmteil
- 24a: ausgangsseitiges Klemmteil
- 24b: ausgangsseitiges Klemmteil
- 26: horizontale Querrichtung
- 28: Laser
- 28a: Laserhalter
- 30: Laserstrahl
- 32: Leiterplatte
- 32a: Leiterplattenhalter
- 34: unterer positionssensitiver Detektor
- 35: Ventil
- 36: gebrochene Laserstrahlkomponente
- 38: oberer positionssensitiver Detektor
- 40: erste Seitenwand
- 42: zweite Seitenwand
- 44: reflektierte Laserstrahlkomponente
- 46: Verschraubung
- 48: Mosfet
- 50: Trennbehälter
- 52: Phasengrenze
- 54: Auslass

## Patentansprüche

1. Phasentrenner zur Trennung mindestens zweier Fluide (8, 10) mit einer Phasentrennkammer (1), die einen Einlass (6) und zwei Auslässe (14, 16) aufweist, wobei die beiden Auslässe (14, 16) entlang einer vertikalen Richtung (18) einen Abstand zueinander aufweisen, und wobei der Einlass (6) und die beiden Auslässe (14, 16) vorzugsweise ein nicht körperliches Dreieck bilden, und wobei in der Phasentrennkammer (1) benachbart zum Einlass (6) eine Einlasszone (7) und benachbart zu den beiden Auslässen (14, 16) eine Auslasszone (9) angeordnet sind, und wobei von der Einlasszone (7) zu der Auslasszone (9) eine Strömungsrichtung (2) gebildet ist, und wobei mittels einer Steuerelektronik ein jeweiliger Volumenstrom der beiden Fluide (8, 10) durch die beiden Auslässe in Abhängigkeit einer im Bereich der Auslasszone (9) angeordneten Sensoranordnung steuerbar ist, **dadurch gekennzeichnet, dass** die Sensoranordnung einen Laser (28) und eine Laserdetektoranordnung aufweist, wobei ein Laserstrahl (30) auf eine Soll-Phasengrenze (12a) zwischen den beiden Fluiden (8, 10) gerichtet ist, und wobei über die Laserdetektoranordnung eine Brechung des Laserstrahls (30) durch zumindest eines der Fluide (8, 10) und/oder eine Reflexion des Laserstrahls (30) an einer Phasengrenze (12) zwischen den beiden Fluiden (8, 10) detektierbar sind / ist.

2. Phasentrenner nach Anspruch 1, wobei der Laser (28) an einer ersten Seite und die Laserdetektoranordnung an einer der ersten Seite gegenüberliegenden zweiten Seite der Strömungsrichtung (2) angeordnet ist.

3. Phasentrenner nach Anspruch 2, wobei an der ersten Seite und an der zweiten Seite der Strömungsrichtung (2) jeweils eine flächige Seitenwand (40, 42) der Phasentrennkammer (1) angeordnet ist.

4. Phasentrenner nach Anspruch 3, wobei die beiden Seitenwände (40, 42) zumindest abschnittsweise für den Laserstrahl (30) transparent sind, oder wobei die Phasentrennkammer (1) aus einem für den Laserstrahl (30) transparenten Material gefertigt ist.

5. Phasentrenner nach einem der vorhergehenden Ansprüche, wobei sich die Strömungsrichtung (2) entlang der Soll-Phasengrenze (12a) erstreckt, und wobei der Laserstrahl (30) 25° bis 35° zu einer horizontalen Querrichtung (26) angestellt ist.

6. Phasentrenner nach einem der vorhergehenden Ansprüche, wobei die Laserdetektoranordnung einen oberen positionssensitiven Detektor (38) zur Erfassung einer an der Phasengrenze (12) reflektieren Laserstrahlkomponente (44) oder des an der Phasengrenze (12) totalreflektieren Laserstrahls (44) aufweist, und wobei die Laserdetektoranordnung einen unteren positionssensitiven Detektor (34) zu Erfassung einer an der Phasengrenze (12) gebrochenen Laserstrahlkomponente (36) oder zur Erfassung der Brechung des Laserstrahls (30) durch eines der Fluide (8, 10) aufweist.

7. Phasentrenner nach einem der vorhergehenden Ansprüche, wobei die Laserdetektoranordnung auf oder an einer Leiterpatte (32) befestigt ist.

8. Phasentrenner nach Anspruch 7, wobei der Laser (28) mittels eines auf oder an der Leiterpatte (32) angeordneten Mosfets (48) mit Strom versorgbar und/oder steuerbar ist.

9. Phasentrenner nach Anspruch 3 oder 4 und nach Anspruch 7 oder 8, wobei die Leiterpatte (32) von einem Leiterplattenhalter (32a) in einem Abstand entlang einer horizontalen Querrichtung (26) zur Seitenwand (42) der Phasentrennkammer (1) gehalten ist, und wobei der Laser (28) von einem Laserhalter (28a) gehalten ist, und wobei der Leiterplattenhalter (32a) und der Laserhalter (28a) aus einem gleichen Material gefertigt sind.

10. Phasentrenner nach Anspruch 9, wobei die Phasentrennkammer (1) zwischen dem Leiterplattenhalter (32a) und dem Laserhalter (28a) mittels einer Verschraubung (46) eingespannt ist.

11. Phasentrenner nach Anspruch 9 oder 10, wobei der Leiterplattenhalter (32a) relativ zum Laser (28) und/oder zur Phasentrennkammer (1) positionierbar ist.

12. Phasentrenner nach einem der Ansprüche 9 bis 11, wobei der Leiterplattenhalter (32a) und/oder der Laserhalter (28a) aus Aluminium und/oder mit einem additiven Fertigungsverfahren hergestellt sind.

13. Phasentrenner nach einem der vorhergehenden Ansprüche, wobei mit der Phasentrennkammer (1) ein Trennbehälter (50) verbunden ist, dessen Auslass (54) an den Einlass (6) der Phasentrennkammer (1) angeschlossen ist.

14. Verfahren zum Betrieb eines Phasentrenners gemäß einem der vorhergehenden Ansprüche mit den Schritten:
- Einströmen des Fluidgemisches (4) durch den Einlass (6) in die Phasentrennkammer (1);
- Ausbildung der Phasengrenze (12) in der Phasentrennkammer (1);
- Abströmen des unteren Fluids (8) durch den unteren Auslass (16) und Abströmen des oberen Fluids (10) durch den oberen Auslass (14);
- Regeln der Phasengrenze (12) etwa mittig in der Phasentrennkammer (1) oder mittig zwischen den beiden Auslässen (14, 16);
**gekennzeichnet durch** die Schritte:
- Emittieren eines Laserstrahls (30) auf die Soll-Phasengrenze (12a);
- Ermittlung der Brechung und/oder Reflexion des Laserstrahls (30).

15. Verfahren nach Anspruch 14 mit einer vorbereitenden Kalibrierung des Phasentrenners durch den Schritt:
- Ermittlung der jeweiligen Brechung des Laserstrahls (30) für die zu trennenden Fluide (8, 10).

16. Verfahren nach Anspruch 14 oder 15 mit einer Messung der Reinheit mindestens eines der beiden Fluide (8, 10) durch den Schritt:
- Ermittlung der Brechung und/oder Reflexion des Laserstrahls (30) für das Fluid (8, 10), dessen Reinheit bestimmt werden soll.
